# EUROPEAN PATENT SPECIFICATION

(11) **EP 3 733 332 B1**
(45) Date of publication and mention of the grant of the patent: **09.11.2022**
(21) Application number: 19171911.1
(22) Date of filing: 30.04.2019
(51) Int. Cl.: B23Q 17/09, G05B 19/12, B23B 27/14, B23C 5/20

(54) **A CUTTING TOOL, SYSTEM AND METHOD FOR INCREASING TRACEABILITY OF A CUTTING EDGE**
SCHNEIDWERKZEUG, SYSTEM UND VERFAHREN ZUR ERHÖHUNG DER TRACEABILITY EINER SCHNEIDKANTE
OUTIL DE COUPE, SYSTÈME ET PROCÉDÉ D'AUGMENTATION DE LA TRAÇABILITÉ D'UN BORD DE COUPE

(43) Date of publication of application: 04.11.2020
(73) Proprietor: Seco Tools AB, 737 82 Fagersta (SE)
(72) Inventor: Baudin, Micael, 75221 Uppsala (SE); Gravningsbråten, Jan, 73790 Ängelsberg (SE)
(74) Representative: Sandvik

(56) References cited:
- EP-A1- 1 369 811
- WO-A1-00/38867
- WO-A1-2019/094997
- JP-A- 2004 351 555
- US-A1- 2018 039 807

## Description

### TECHNICAL FIELD

The present invention relates to a cutting tool as per the preamble of claim 1. An example of such a cutting tool is disclosed by JP 2004 351555 A.

### BACKGROUND

A cutting tool may comprise one or more cutting edges that are used for removing chips from a piece of material. Typically a cutting tool is inserted into a cutting tool holder and a machine is e.g. rotating the cutting tool holder together with the cutting tool for processing the piece of material. The piece of material is processed when a cutting edge of the cutting tool comes in contact with the piece of material. A cutting tool may comprise one or more cutting edges that are used for removing chips from the piece of material that is being processed by the cutting tool. A cutting edge becomes worn when it is removing chips form the piece of the material. When a cutting edge, or a plurality of cutting edges, of a cutting tool is worn to a certain extent, the cutting tool may need to be replaced or cannot be used for certain type of processing. Dependent on the usage of the cutting tool, e.g. dependent on the piece of material that is processed, and how the piece of material is processed, the cutting edges of the cutting tool becomes worn in a certain way. Today many end-customers are not managing how a certain cutting tool is used. Further, manufacturers of cutting tools and cutting edges are also not aware of e.g. certain usage that caused a certain worn of a certain cutting edge of a cutting tool. A manufacturer of a cutting tool also have difficulties knowing when a certain cutting edge of a cutting tool was produced and e.g. under what circumstances the cutting edge was produced, the specific materials used etc.

### SUMMARY

Today there are cutting tools with an identification marking on each tool in order to manage the tools. A cutting tool can then be identified. There is however a demand for an easier way to increase traceability of the cutting edges on the cutting tools. Different cutting edges can be worn differently, and a certain cutting edge may be dysfunctional on a certain cutting tool. Not knowing anything about the specific cutting edge but only the identification of the cutting tool will not help traceability of a particular cutting edge. In order to e.g. improve the manufacturing process of cutting edges, there is a demand for an increased traceability of each and every cutting edge, and traceability of the cutting tool with the certain cutting edges. There is also a demand for associating data such as operational data together with a specific cutting edge. Both manufacturers of cutting edges and end-customers of the cutting edges benefit from understanding production details and operation details that are associated with each cutting edge throughout the lifetime of each cutting edge of a cutting tool. These details can e.g. help the manufacturer to improve the manufacturing of cutting edges, and the details can help an end-customer of a cutting tool with cutting edges to e.g. manage the cutting tool and associate certain operation data with a certain cutting tool with certain cutting edges.

An object of the present disclosure is to provide a cutting tool, a system, a method and a computer program product which seek to mitigate, alleviate, or eliminate one or more of the above-identified deficiencies in the art and disadvantages singly or in any combination.

The invention proposes a cutting tool having the features of claim 1.

According to an optional aspect the first identification marker is arranged on the cutting tool at a distance to the first cutting edge that is shorter than the distance from the first identification marker to the second cutting edge, and the second identification marker is arranged on the cutting tool at a distance to the second cutting edge that is shorter than the distance from the second identification marker to the first cutting edge. One advantage with this arrangement of the identification markers is hence that an operator, or a machine, can determine which cutting edge that is associated with a certain identification marker.

According to an optional aspect the at least first identification marker is at least any of, or a combination of at least any of, a two dimensional code, a three dimensional code, an image, a Quick Response code, a High Capacity Colored Two Dimensional Code, a European Article Number code, a DataMatrix code or a MaxiCode. This means that the at least first identification marker is visually readable on the cutting tool by a machine but also visually detectable by e.g. an operator handling the cutting tool.

The invention further proposes a system for increasing traceability of at least a first cutting edge of a cutting tool having the features of claim 4.

According to an optional aspect the system further comprises a cutting tool comprising at least a first cutting edge, wherein the cutting tool is configured to be mounted in a cutting tool holder. This means that the cutting tool can be mounted in a cutting tool holder of a machine for processing a piece of material. According to an aspect the cutting tool further comprising a tool holder.

The invention further proposes a method for increasing traceability of at least a first cutting edge of a cutting tool having the features of claim 6.

According to an optional aspect the method further comprising the step of receiving input of at least a first operation data to be associated with at least any of the at least first cutting tool identification data and the at least first cutting edge information data and the step of storing the at least first operation data associated with at least one of the at least first cutting tool identification data and the at least first cutting edge information data in the memory. This means that a first operation data can be stored and associated with at least one of the at least first cutting tool identification data and the at least first cutting edge information data, so that the first operation data can be retrieved at a later point of time with knowledge of at least one of the at least first cutting tool identification data and the at least first cutting edge information data.

According to an optional aspect the method further comprising the step of generating at least a first association data comprising the at least first cutting tool identification data associated with at least one of the at least first cutting edge information data and the at least first operation data and storing the at least a first association data in the memory. This means that the at least a first association data can be used for identifying the at least first cutting tool identification data with knowledge of any of the at least first cutting edge information data and the at least first operation data, or that the at least a first association data can be used for identifying at least any of the first cutting edge information data and the at least first operation data with knowledge of the at least first cutting tool identification data.

According to an optional aspect the method further comprising the step of detecting, by the reader device, at least the first identification marker on the cutting tool, followed by the step of reading, by the reader device, the at least first identification marker, and the step of decoding the at least first identification marker to determine the first cutting edge information data comprised in the machine readable code of the at least first identification marker. The method then further comprising the step of retrieving, from the memory, at least any of the first cutting tool identification data associated with the first cutting edge information data, and the at least first operation data associated with the first cutting edge information data. In other words by reading the at least the first identification marker with a reader device, information about any of the at least first cutting tool identification data and the at least first operation data can be retrieved from the memory.

According to an optional aspect the method further comprising the step of displaying, via a user interface, at least any of the first cutting tool identification data, the first cutting edge information data, and the at least first operation data. This means that an operator can see the retrieved information via a user interface.

According to an optional aspect the method is performed at an electronic device having at least one processing circuitry.

The invention further proposes a computer program product comprising a non-transitory computer readable medium, having thereon a computer program comprising program instructions, the computer program being loadable into a processing circuitry and configured to cause execution of the method of claim 6, when the computer program is run by the processing circuitry.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
Figures 1a-1d illustrates different cutting tools according to some aspects of the disclosure.
Figures 2a-2c illustrates different systems according to some aspects of the disclosure.
Figure 3 illustrates a flow chart of the method steps according to some aspects of the disclosure.
Figure 4 illustrates a computer program product according to some aspects of the disclosure.
Figure 5 illustrates example cutting tool identification data associated with cutting edge information data and operation data according to some aspects of the disclosure.
Figure 6 illustrates example cutting tools each with unique cutting edge information data according to some aspects of the disclosure.

### DETAILED DESCRIPTION

Aspects of the present disclosure will be described more fully hereinafter with reference to the accompanying drawings. The method and device disclosed herein can, however, be realized in many different forms and should not be construed as being limited to the aspects set forth herein. Like numbers in the drawings refer to like elements throughout.

The terminology used herein is for the purpose of describing particular aspects of the disclosure only, and is not intended to limit the disclosure. As used herein, the singular forms "a", "an" and "the" are intended to include the plural forms as well, unless the context clearly indicates otherwise.

In some implementations and according to some aspects of the disclosure, the functions or steps noted in the blocks can occur out of the order noted in the operational illustrations. For example, two blocks shown in succession can in fact be executed substantially concurrently or the blocks can sometimes be executed in the reverse order, depending upon the functionality/acts involved.

In the drawings and specification, there have been disclosed exemplary aspects of the disclosure. However, many variations and modifications can be made to these aspects within the scope of the claims. Thus, the disclosure should be regarded as illustrative rather than restrictive, and not as being limited to the particular aspects discussed above. Accordingly, although specific terms are employed, they are used in a generic and descriptive sense only and not for purposes of limitation.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

In order to e.g. improve the manufacturing process of cutting edges, there is a demand for an increased traceability of each and every cutting edge, and traceability of the cutting tool with the certain cutting edges. There is also a demand for associating data such as operational data together with a specific cutting edge. Both manufacturers of cutting tools and end-customers of the cutting tools benefit from understanding production details and operation details that are associated with each cutting edge throughout the lifetime of the cutting edge. These details can e.g. help the manufacturer to improve the manufacturing of cutting edges, and the details can help an end-customer of a cutting tool with cutting edges to e.g. manage the cutting tool and associate certain operation data with a certain cutting tool with certain cutting edges.

An object of the present disclosure is to provide a cutting tool, a system, a method and a computer program product which seek to mitigate, alleviate, or eliminate one or more of the above-identified deficiencies in the art and disadvantages singly or in any combination.

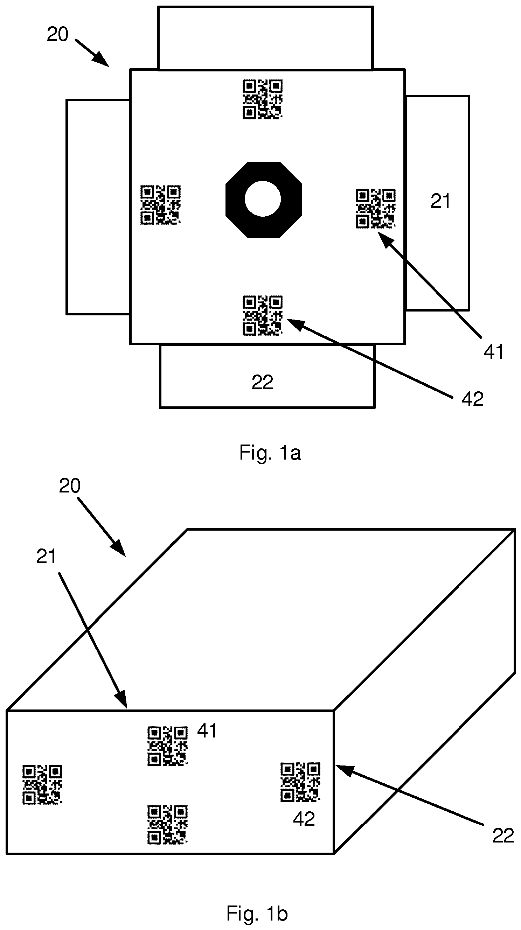

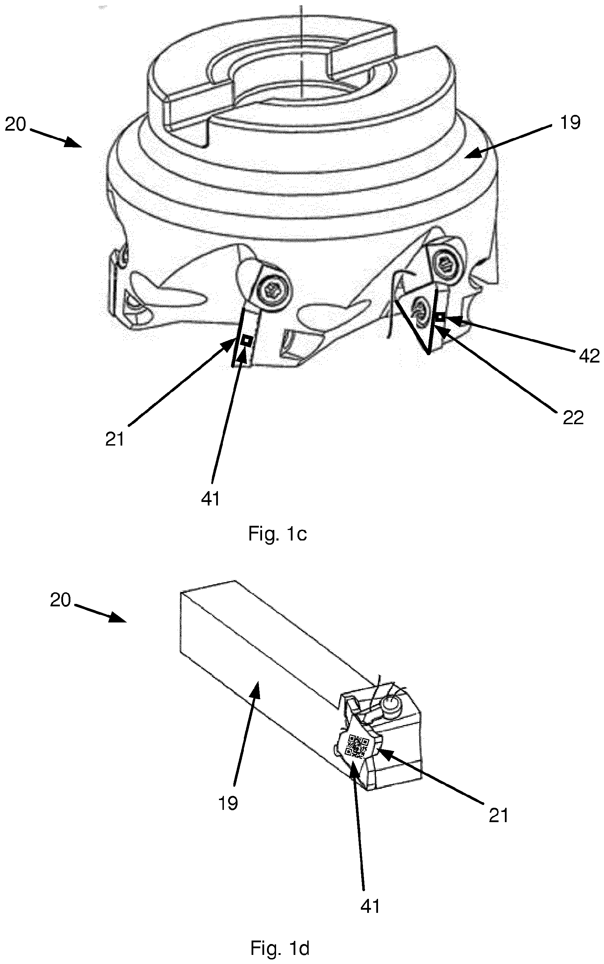

The disclosure proposes a cutting tool 20 comprising at least a first cutting edge 21 and at least a first identification marker 41 arranged at the first cutting edge 21. Figure 1a-1d illustrates different cutting tools according to some aspects of the disclosure. There are different kinds of cutting tools. Examples of cutting tools are cutting inserts, milling cutters, solid end mills, turning tools, drilling tools, boring heads, reaming tools, thread turning tools, thread milling tools, and thread tapping tools, etc.

The at least first identification marker 41 is a machine readable code associated with a first cutting edge information data 1ceID. This means that the at least a first cutting edge 21 can be identified using the first cutting edge information data 1ceID. The cutting edge information data is a unique identity. According to an aspect the cutting edge information data is a number and/or a combination of figures and letters. According to an aspect the cutting edge information data is a serial number. Dependent on at what point in the product lifetime the cutting tool 20 is, the cutting edge information data may comprise further information as will be discussed in more detail below.

The cutting tool 20 illustrated in figure 1d comprising a first cutting edge 21 and a first identification marker 41 arranged at the first cutting edge 21. The cutting tool 20 comprising a plurality of cutting edges, as illustrated in figures 1a-1c.

The cutting tool 20 further comprising a second cutting edge 22 and a second identification marker 42 arranged at the second cutting edge 22 wherein the second identification marker 42 is a machine readable code associated with a second cutting edge information data 2ceID. This means that the first cutting edge 21 can be identified using the first cutting edge information data 1ceID and that the second cutting edge 22 can be identified using the second cutting edge information data 2ceID. In other words the different cutting edges have different identification markers and each cutting edge is associated with individual cutting edge information data.

According to an aspect the first identification marker 41 is arranged on the cutting tool 20 at a distance to the first cutting edge 21 that is shorter than the distance from the first identification marker 41 to the second cutting edge 22, and the second identification marker 42 is arranged on the cutting tool 20 at a distance to the second cutting edge 22 that is shorter than the distance from the second identification marker 42 to the first cutting edge 21. This is illustrated in the figures 1a-1c. One advantage with this arrangement of the identification markers is that an operator, or a machine, can determine which cutting edge that is associated with a certain identification marker. An operator can easy determine that a certain identification marker is associated with a certain cutting edge by visual inspection of the cutting tool. A machine, e.g. utilizing a camera sensor an image processing, can also determine that a certain identification marker is associated with a certain cutting edge by e.g. using object recognition to determine the distance to the cutting edge.

According to an aspect the at least first identification marker 41 is at least any of, or a combination of at least any of, a two dimensional code, a three dimensional code, an image, a Quick Response code, a High Capacity Colored Two Dimensional Code, a European Article Number code, a DataMatrix code or a MaxiCode. This means that the at least first identification marker 41 is visually readable on the cutting tool 20 by a machine but also visually detectable by e.g. an operator handling the cutting tool.

According to an aspect the at least first identification marker 41 is an industry standard machine readable code. According to an aspect the at least first identification marker 41 is a company internal machine readable code. According to an aspect the at least first identification marker 41 is an open source machine readable code.

According to an aspect the at least first identification marker 41 is applied using different colours. According to an aspect the at least first identification marker 41 is etched at the cutting tool close to the cutting edge or etched on the surface of the cutting edge.

According to an aspect the association between the machine readable code and the cutting edge information data is defined by a known algorithm for the specific identification marker. According to an aspect cutting edge information data is coded, using a known algorithm for a specific identification marker, which determines the appearance of the identification marker.

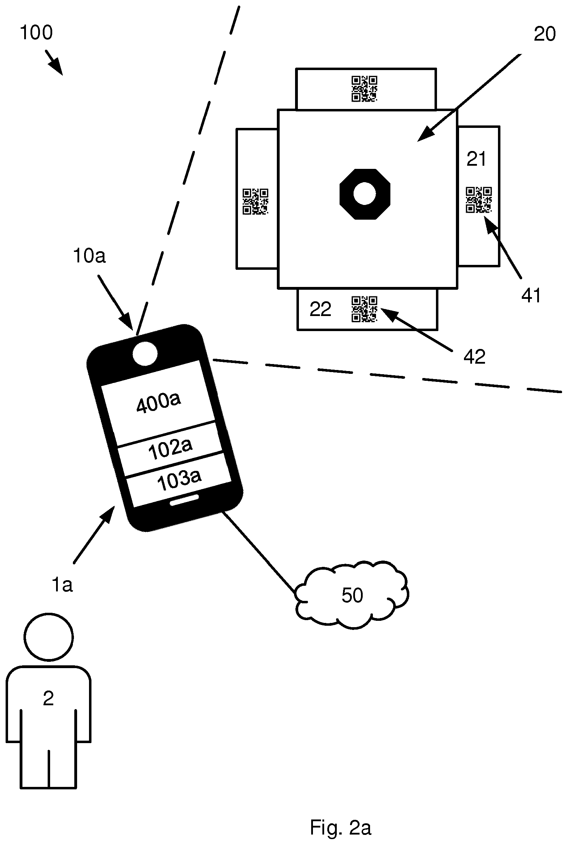

The disclosure further proposes a system 100 for increasing traceability of at least a first cutting edge 21 of a cutting tool 20. Figures 2a-2c illustrates different systems according to some aspects of the disclosure.

The system 100 comprises a reader device 10a, 10b, 10c for reading a machine readable code. According to an aspect the reader device 10a, 10b, 10c is any of a camera based reader; a video camera reader; a pen-type reader with photodiodes; a laser scanner; a charge-coupled device, CCD, reader or a cell phone camera. The reader device 10a, 10b, 10c may be a component integrated in an electronic device 1a, 1b, 1c or a stand-alone component. The system further comprises an electronic device 1a, 1b, 1c configured to be connected with the reader device 10a, 10b, 10c. According to an aspect the electronic device 1a, 1b, 1c is configured to be connected with a communication network 50. Figure 2a illustrates an electronic device la in form of a smartphone, tablet, cellular phone, feature phone or any portable electronic device. In one example, illustrated in figure 2a, the reader device 10a is the camera of a smartphone la.

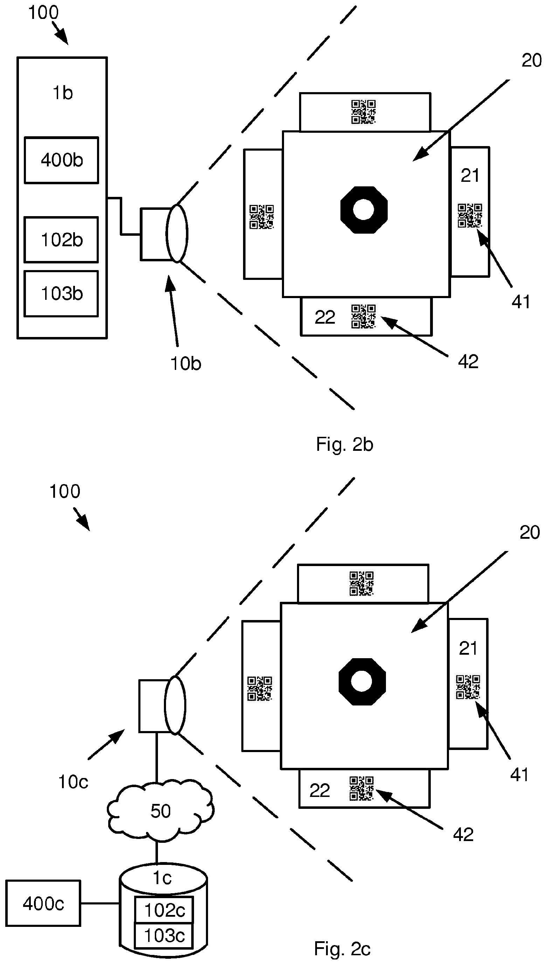

The electronic device may also be an installed electronic device 1b, e.g. a part of a machine as illustrated in figure 2b. In one example, illustrated in figure 2b, the reader device 10b is a stand-alone reader device connected to the electronic device 1b and installed as a part of the machine.

According to an aspect the electronic device is a remote server 1c connected to a reader device 10c via a communication network 50.

According to an aspect the electronic device 1a, 1b, 1c further comprising a memory 103a, 103b, 103c. According to an aspect one electronic device 1a, 1b, 1c is configured to be connected to another electronic device 1a, 1b, 1c via a communication network 50. In one example the communication network 50, as illustrated in e.g. figure 2a and figure 2c, is a standardized wireless local area network such as a Wireless Local Area Network, WLAN, Bluetooth^{™}, ZigBee, Ultra-Wideband, Near Field Communication, NFC, Radio Frequency Identification, RFID, or similar network. In one example the communication network 50 is a standardized wireless wide area network such as a Global System for Mobile Communications, GSM, Extended GSM, General Packet Radio Service, GPRS, Enhanced Data Rates for GSM Evolution, EDGE, Wideband Code Division Multiple Access, WCDMA, Long Term Evolution, LTE, Narrowband-loT, 5G, Worldwide Interoperability for Microwave Access, WiMAX or Ultra Mobile Broadband, UMB or similar network. The communication network 50 can also be a combination of both a local area network and a wide area network. The communication network 50 can also be a wired network. According to an aspect the communication network 50 is defined by common Internet Protocols. According to an aspect the electronic device 1a, 1b, 1c is configured to be connected to a memory 103a, 103b, 103c in another electronic device 1a, 1b, 1c via the communication network 50.

The electronic device 1a, 1b, 1c having at least one processing circuitry 102a, 102b, 102c configured to cause the system 100 to detect, by the reader device 10a, 10b, 10c, at least a first identification marker 41 on the cutting tool 20 wherein the at least first identification marker 41 is a machine readable code. The processing circuitry 102a, 102b, 102c is then further configured to cause the system 100 to read, by the reader device 10a, 10b, 10c, the at least first identification marker 41 and decode the at least first identification marker 41 to determine at least a first cutting edge information data 1ceID comprised in the machine readable code of the at least first identification marker 41.

The processing circuitry 102a, 102b, 102c is then further configured to cause the system 100 to generate a first cutting tool identification data 1ctID based on at least the at least first cutting edge information data 1ceID and store at least any of the at least first cutting tool identification data 1ctID and the at least first cutting edge information data 1ceID in a memory 103a, 103b, 103c. One advantage with the system is that the generated first cutting tool identification data 1ctID is based on the at least first cutting edge information data 1ceID. This means that there is an association between the generated first cutting tool identification data 1ctID and the at least first cutting edge information data 1ceID. The first cutting tool identification data 1ctID is based on a unique identity comprised in the first cutting edge information data 1ceID. In one example the first cutting edge information data 1ceID is a serial number, e.g. ABCD12345, and the first cutting tool identification data 1ctID is generated based on the serial number, e.g. by adding the actual time, e.g. 2019/04/15 15:36, when the first cutting tool identification data 1ctID is generated, e.g. "2019/04/15 15:36 ABCD12345".

In another example the first cutting edge information data 1ceID is a serial number, e.g. ABCD12345, and the first cutting tool identification data 1ctID is generated based on the serial number, e.g. by adding a customer order number, e.g. 12009800, when the first cutting tool identification data 1ctID is generated, e.g. "12009800 ABCD12345". In other words from the moment when the first cutting tool identification data 1ctID is generated there is an association between the cutting tool identification data 1ctID and the at least first cutting edge information data 1ceID.

The at least first cutting edge information data 1ceID comprising a unique identity and manufacturing information data. In one example the manufacturer of cutting tools generates cutting edge information data based on the unique identity, e.g. a serial number, and adding manufacturing data such as manufacturing date and time, material data, oven data, etc. According to an aspect the processing circuitry 102a, 102b, 102c is further configured to cause the system 100 to detect, by the reader device 10a, 10b, 10c, a second identification marker 42 on the cutting tool 20 wherein the second identification marker 42 is a machine readable code. The processing circuitry 102a, 102b, 102c is then further configured to cause the system 100 to read, by the reader device 10a, 10b, 10c, the second identification marker 42, and decode the second identification marker 42 to determine a second cutting edge information data 2ceID comprised in the machine readable code of the second identification marker 42. The processing circuitry 102a, 102b, 102c is then further configured to cause the system 100 to generate a first cutting tool identification data 1ctID based on the first cutting edge information data 1ceID and the second cutting edge information data 2ceID. One advantage with the system is then that the generated first cutting tool identification data 1ctID is based on the at least first cutting edge information data 1ceID and the second cutting edge information data 2ceID. This means that there is an association between the generated first cutting tool identification data 1ctID and the at least first cutting edge information data 1ceID and the second cutting edge information data 2ceID.

The first cutting tool identification data 1ctID is based on the unique identity comprised in the first cutting edge information data 1ceID and on the unique identity comprised in the second cutting edge information data 2ceID. In one example the first cutting edge information data 1ceID is a serial number, e.g. ABCD12345, and the second cutting edge information data 2ceID is a serial number, e.g. EFGH67890, and the first cutting tool identification data 1ctID is generated based on both serial numbers, e.g. by adding the actual time e.g. 2019/04/15 15:36 when the first cutting tool identification data 1ctID is generated, e.g. "2019/04/15 15:36 ABCD12345 EFGH67890".

In another example the first cutting edge information data 1ceID is a serial number, e.g. ABCD12345, and the second cutting edge information data 2ceID is a serial number, e.g. EFGH67890, and the first cutting tool identification data 1ctID is generated based on both serial numbers, e.g. by adding a customer order number, e.g. 12009800, when the first cutting tool identification data 1ctID is generated, e.g. "12009800 ABCD12345 EFGH67890". In other words from the moment when the first cutting tool identification data 1ctID is generated there is an association between the cutting tool identification data 1ctID and the first cutting edge information data 1ceID and the second cutting edge information data 2ceID.

According to an aspect, when manufacturing the cutting tool 20 the manufacturer is using all the existing identification markers on each cutting edge, that are mounted on the cutting tool 20, in order to generate a first cutting tool identification data 1ctID that is based on each existing cutting edge information data on the cutting tool 20. In other words, when generating the first cutting tool identification data 1ctID there is an association with each cutting edge information data of each cutting edge that exists on the cutting tool 20. This may be desired in order to be able to trace a certain cutting edge at a later point of time during the lifetime of the cutting tool 20.

According to an aspect the system 100 further comprises a cutting tool 20 comprising at least a first cutting edge 21, wherein the cutting tool 20 is configured to be mounted in a cutting tool holder 19. This means that the cutting tool can be mounted in a cutting tool holder 19 of a machine for processing a piece of material. According to an aspect the cutting tool 20 further comprising a tool holder 19.

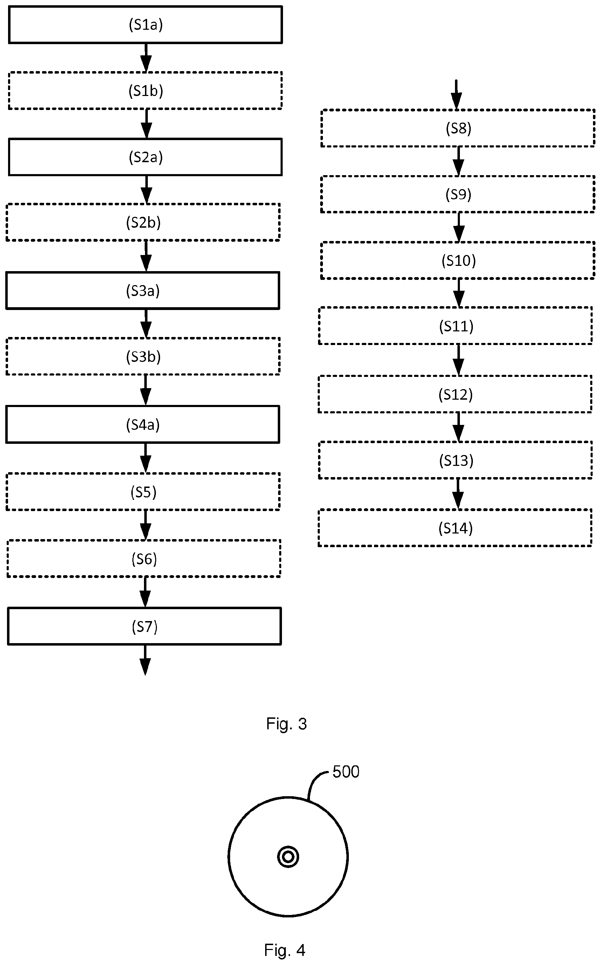

The disclosure further proposes a method for increasing traceability of at least a first cutting edge 21 of a cutting tool 20. According to an aspect the described system 100 is configured to carry out any or more of the aspects of the method that will be described hereinafter. The steps of the method is illustrated in figure 3.

The method comprising the step of S1a detecting, by a reader device 10a, 10b, 10c, at least a first identification marker 41 on the cutting tool 20 wherein the at least first identification marker 41 is a machine readable code. The method further comprising the step of S2a reading, by the reader device 10a, 10b, 10c, the at least first identification marker 41 and the step of S3a decoding the at least first identification marker 41 to determine at least a first cutting edge information data 1ceID comprised in the machine readable code of the at least first identification marker 41. The method then further comprising the step of S4a generating a first cutting tool identification data 1ctID based on at least the at least first cutting edge information data 1ceID and the step of S7 storing at least any of the at least first cutting tool identification data 1ctID and the at least first cutting edge information data 1ceID in a memory 103a, 103b, 103c. One advantage with the method is that the generated first cutting tool identification data 1ctID is based on the at least first cutting edge information data 1ceID. This means that there is an association between the generated first cutting tool identification data 1ctID and the at least first cutting edge information data 1ceID.

According to an aspect the method further comprising the step of S1b detecting, by the reader device 10a, 10b, 10c, a second identification marker 42 on the cutting tool 20 wherein the second identification marker 42 is a machine readable code; followed by the step of S2b reading, by the reader device 10a, 10b, 10c, the second identification marker 42, followed by the step of S3b decoding the second identification marker 41 to determine a second cutting edge information data 2ceID comprised in the machine readable code of the second identification marker 42. The method then further comprising the step of S4b generating a first cutting tool identification data 1ctID based on the first cutting edge information data 1ceID and the second cutting edge information data 2ceID. One advantage with this aspect of the method is that the generated first cutting tool identification data 1ctID is based on the at least first cutting edge information data 1ceID and the second cutting edge information data 2ceID. This means that there is an association between the generated first cutting tool identification data 1ctID and the at least first cutting edge information data 1ceID and the second cutting edge information data 2ceID.

According to an aspect the method further comprising the step of S5 receiving input of at least a first operation data 10D to be associated with at least any of the at least first cutting tool identification data 1ctID and the at least first cutting edge information data 1ceID and the step of S8 storing the at least first operation data 10D associated with at least one of the at least first cutting tool identification data 1ctID and the at least first cutting edge information data 1ceID in the memory 103a, 103b, 103c. This means that a first operation data 10D can be stored and associated with at least one of the at least first cutting tool identification data 1ctID and the at least first cutting edge information data 1ceID, so that the first operation data 10D can be retrieved at a later point of time with knowledge of at least one of the at least first cutting tool identification data 1ctID and the at least first cutting edge information data 1ceID.

According to an aspect the input of at least a first operation data 10D is input by an operator via a user interface 400a, 400b, 400c of the electronic device 1a, 1b,1c. According to an aspect the input of at least a first operation data 10D is input from a machine connected to the electronic device 1a, 1b, 1c.

According to an aspect the least a first operation data 10D is "preparation for operation data". In one example the preparation for operation data relates to manufacturing data such as batch number data, manufacturing date and time data, material composition data, oven identification data, manufacturing plant data, material sourcing data, contact information data, part identification data, order identification data etc.

According to an aspect the at least first operation data 10D is "after operation data". In one example the after operation data relates to usage by a customer such as machine identification data, usage date and time data, material handling data, runtime data, temperature data, rounds per minute data, material identification data, operator identification data, machine identification data, customer identification data, free text data.

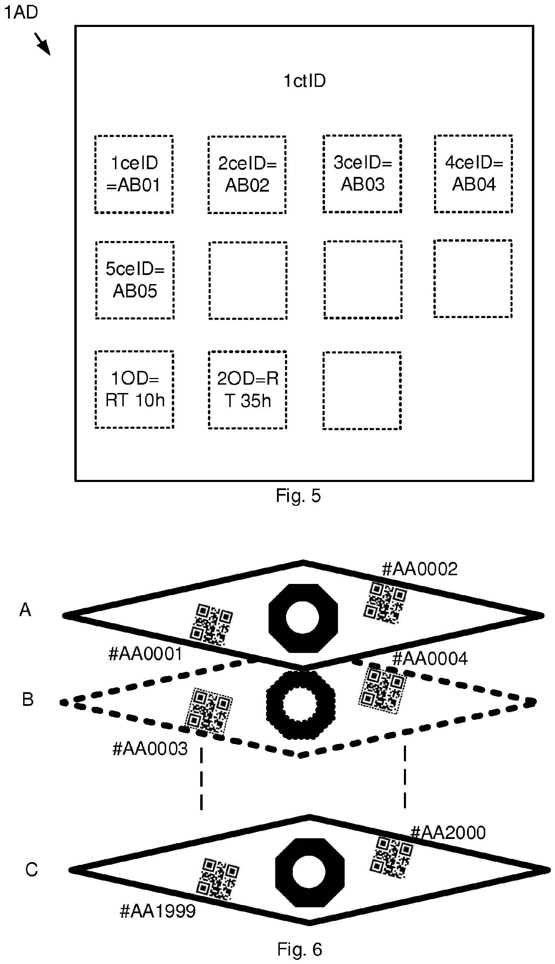

Figure 5 illustrates example associations that can be determined out from a first cutting tool identification data 1ctID. In the example in figure 5 the first cutting tool identification data 1ctID is generated based on five different cutting edge information: 1ceID=AB01, 2ceID=AB02 3ceID=AB03, 4ceID=AB04 and 5ceID=AB05. In the example in figure 5 the first cutting tool identification data 1ctID is further associated with a first operation data 10D=RT10h and a second operation data 20D=RT35h.

According to an aspect the method further comprising the step of S6 generating at least a first association data 1AD comprising the at least first cutting tool identification data 1ctID associated with at least one of the at least first cutting edge information data 1ceID and the at least first operation data 10D and S9 storing the least a first association data 1AD in the memory 103a, 103b, 103c. This means that the at least a first association data 1AD can be used for identifying the at least first cutting tool identification data 1ctID with knowledge of any of the at least first cutting edge information data 1ceID and the at least first operation data 10D, or that the at least a first association data 1AD can be used for identifying at least any of the first cutting edge information data 1ceID and the at least first operation data 10D with knowledge of the at least first cutting tool identification data 1ctID. Again, figure 5 is used for illustrating a first association data 1AD. In the example in figure 5 the first association data 1AD comprising all associations possible between the plural cutting tool identification data; 1ctID, 2ctID, 3ctID, 4ctID and 5ctID, and the first cutting tool identification data 1ctID, and the first operation data 10D=RT10h and the second operation data 20D=RT35h.

According to an aspect the method further comprising the step of S10 detecting, by the reader device 10a, 10b, 10c, at least the first identification marker 41 on the cutting tool 20, followed by the step of S11 reading, by the reader device 10a, 10b, 10c, the at least first identification marker 41, and the step of S12 decoding the at least first identification marker 41 to determine the first cutting edge information data 1ceID comprised in the machine readable code of the at least first identification marker 41. The method then further comprising the step of S13 retrieving, from the memory 103a, 103b, 103c, at least any of the first cutting tool identification data 1ctID associated with the first cutting edge information data 1ceID, and the at least first operation data 10D associated with the first cutting edge information data 1ceID. In other words by reading the at least the first identification marker 41 with a reader device 10a, 10b, 10c information about any of the at first cutting tool identification data 1ctID and the at least first operation data 10D can be retrieved from the memory 103a, 103b, 103c. An example is illustrated with reference to figure 5. In the example the reader device 10a, 10b, 10c reads a second identification marker 42 to determine the second cutting edge information data 2ceID comprised in the machine readable code of the second identification marker 42. In the example in figure 5 the second cutting edge information data 2ceID=AB02. Now since "AB02" is associated with the first cutting tool identification data 1ctID, it can be determined that the read identification marker, in this case the second identification marker 42, belongs to the cutting tool 20 with the first cutting tool identification data 1ctID. Since the first cutting tool identification data 1ctID is further associated with four other cutting edge information data, it can be determined that the cutting tool 20 further comprises the four cutting edges associated with the cutting edge identification data 1ceID, 3ceID, 4ceID and 5ceID. In the example of figure 5 it can further be determined that the cutting tool 20 is also associated with a first operation data and a second operation data.

In other words, in a use case example, an operator may use a reader device 10a, 10b, 10c to read any identification marker to determine associated information such as the cutting tool identification data and operation data. In an example, by reading one identification marker at a cutting edge of a cutting tool with 24 different cutting edges, information about each of the other 23 cutting edges on the cutting tool can be retrieved, together with e.g. operation data associated with the cutting tool as such or associated with each and every cutting edge.

In particular this is possible when a manufacturer of a cutting tool generates the cutting tool identification data based on each and every cutting edge information data of each and every cutting edge of a specific cutting tool.

According to an aspect the method further comprising the step of S14 displaying, via a user interface 400a, 400b, 400c, least any of the first cutting tool identification data 1ctID, the first cutting edge information data 1ceID, and the at least first operation data 10D. This means that an operator can see the retrieved information via a user interface 400a, 400b, 400c.

In particular this is of interest for traceability of a cutting edge of a cutting tool. In one example a cutting tool has not processed a piece of material as expected and is malfunctioning. An operator may use a reader device to retrieve information about the particular cutting edge. Operational data such as preparation for operation data including material composition data, together with operation data such as after operation data including runtime data, may give the operator, or e.g. a manufacturer of a cutting tool, a certain understanding of why this cutting edge on this cutting tool has not performed as expected. It may turn out that the material composition when manufacturing the cutting edge was not intended to the total runtime that the cutting edge has been exposed to. A manufacturer could in this case e.g. recommend another cutting tool with other cutting edges for the particular machining, but also learn what will happen to a cutting edge of certain material composition when being exposed to a certain runtime.

Figure 6 illustrates example cutting tools each with unique cutting edge information data according to some aspects of the disclosure. According to an aspect, when manufacturing cutting tools the cutting tool identification data is not yet generated but each cutting tool is provided with identification markers that are machine readable codes associated with cutting edge information data. This means that each cutting edge can be identified using the cutting edge information data. The cutting edge information data is a unique identity. In the example illustrated in figure 6 a batch of 1000 cutting tools are manufactured. The first cutting tool, A, is provided with two identification markers, each associated with cutting edge information data that is unique, in the example #AA0001 and #AA0002. The second cutting tool, B, is provided with two identification markers, each associated with cutting edge information data that is unique, in the example #AA0003 and #AA0004. The last cutting tool of the batch, C, is also provided with two identification markers, each associated with cutting edge information data that is unique, in the example #AA1999 and #AA2000.

According to an aspect the method is performed at an electronic device 1a, 1b, 1c having at least one processing circuitry 102a, 102b, 102c.

The disclosure further proposes, as illustrated in Figure 4, a computer program product 500 comprising a non-transitory computer readable medium, having thereon a computer program comprising program instructions, the computer program being loadable into a processing circuitry 102a, 102b, 102c and configured to cause execution of the method, and any aspect of the method, when the computer program is run by the processing circuitry 102a, 102b, 102c.

According to an aspect the system 100 is configured to carry out any or more of the aspects of the described method. According to an aspect of the disclosure, the method is carried out by instructions in a software program that is downloaded and run in the system 100.

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the embodiments being defined by the following claims.

## Claims

1. A cutting tool (20) comprising at least a first cutting edge (21) and at least a first identification marker (41) arranged at the first cutting edge (21) wherein the at least first identification marker (41) is a machine readable code associated with a first cutting edge information data (1ceID), wherein the cutting tool (20) further comprises a second cutting edge (22) and a second identification marker (42) arranged at the second cutting edge (22), wherein the second identification marker (42) is a machine readable code associated with a second cutting edge information data (2ceID) **characterized in that** the first cutting edge information data (1ceID) and the second cutting edge information data (2ceID) are unique identities.

2. The cutting tool (20) according to claim 1 wherein
the first identification marker (41) is arranged on the cutting tool (20) at a distance to the first cutting edge (21) that is shorter than the distance from the first identification marker (41) to the second cutting edge (22), and
the second identification marker (42) is arranged on the cutting tool (20) at a distance to the second cutting edge (22) that is shorter than the distance from the second identification marker (42) to the first cutting edge (21).

3. The cutting tool (20) according to any of the claims 1-2, wherein the at least first identification marker (41) is at least any of, or a combination of at least any of, a two dimensional code, a three dimensional code, an image a Quick Response code, a High Capacity Colored Two Dimensional Code, a European Article Number code, a DataMatrix code or a MaxiCode.

4. A system (100) for increasing traceability of at least a first cutting edge (21) of a cutting tool (20), the system comprises:
• a reader device (10a, 10b, 10c) for reading a machine readable code;
• an electronic device (1a, 1b, 1c) configured to be connected with the reader device (10a, 10b, 10c), the electronic device (1a, 1b, 1c) having at least one processing circuitry (102a, 102b, 102c) configured to cause the system (100) to:
- detect, by the reader device (10a, 10b, 10c), at least a first identification marker (41) on the cutting tool (20) wherein the at least first identification marker (41) is a machine readable code;
- read, by the reader device (10a, 10b, 10c), the at least first identification marker (41);
- decode the at least first identification marker (41) to determine at least a first cutting edge information data (1ceID) comprised in the machine readable code of the at least first identification marker (41), wherein the first cutting edge information data (1ceID) is a unique identity;
- detect, by the reader device (10a, 10b, 10c), a second identification marker (42) on the cutting tool (20) wherein the second identification marker (42) is a machine readable code;
- read, by the reader device (10a, 10b, 10c), the second identification marker (42);
- decode the second identification marker (41) to determine a second cutting edge information data (2ceID) comprised in the machine readable code of the second identification marker (42), wherein the second cutting edge information data (2ceID) is a unique identity; and
- generate a first cutting tool identification data (1ctID) based on the first cutting edge information data (1ceID) and the second cutting edge information data (2ceID); and
- store at least any of the at least first cutting tool identification data (1ctID) and the at least first cutting edge information data (1ceID) in a memory (103a, 103b, 103c).

5. The system according to claim 4, further comprising:
• a cutting tool (20) comprising at least a first cutting edge (21), wherein the cutting tool (20) is configured to be mounted in a cutting tool holder (19).

6. A method for increasing traceability of at least a first cutting edge (21) of a cutting tool (20), the method comprising:
- (S1a) detecting, by a reader device (10a, 10b, 10c), at least a first identification marker (41) on the cutting tool (20) wherein the at least first identification marker (41) is a machine readable code;
- (S1b) detecting, by the reader device (10a, 10b, 10c), a second identification marker (42) on the cutting tool (20) wherein the second identification marker (42) is a machine readable code;
- (S2a) reading, by the reader device (10a, 10b, 10c), the at least first identification marker (41);
- (S2b) reading, by the reader device (10a, 10b, 10c), the second identification marker (42);
- (S3a) decoding the at least first identification marker (41) to determine at least a first cutting edge information data (1ceID) comprised in the machine readable code of the at least first identification marker (41), wherein the first cutting edge information data (1ceID) is a unique identity;
- (S3b) decoding the second identification marker (41) to determine a second cutting edge information data (2ceID) comprised in the machine readable code of the second identification marker (42), wherein the second cutting edge information data (2ceID) is a unique identity;
- (S4b) generating a first cutting tool identification data (1ctID) based on the first cutting edge information data (1ceID) and the second cutting edge information data (2ceID); and
- (S7) storing at least any of the at least first cutting tool identification data (1ctID) and the at least first cutting edge information data (1ceID) in a memory (103a, 103b, 103c).

7. The method according to claim 6, further comprising :
- (S5) receiving input of at least a first operation data (10D) to be associated with at least any of the at least first cutting tool identification data (1ctID) and the at least first cutting edge information data (1ceID); and
- (S8) storing the at least first operation data (10D) associated with at least one of the at least first cutting tool identification data (1ctID) and the at least first cutting edge information data (1ceID) in the memory (103a, 103b, 103c).

8. The method according to claim 7, further comprising:
- (S6) generating at least a first association data (1AD) comprising the at least first cutting tool identification data (1ctID) associated with at least one of the at least first cutting edge information data (1ceID) and the at least first operation data (1OD); and
- (S9) storing the least a first association data (1AD) in the memory (103a, 103b, 103c).

9. The method according to any of the claims 7-8, further comprising :
- (S10) detecting, by the reader device (10a, 10b, 10c), at least the first identification marker (41) on the cutting tool (20);
- (S11) reading, by the reader device (10a, 10b, 10c), the at least first identification marker (41);
- (S12) decoding the at least first identification marker (41) to determine the first cutting edge information data (1ceID) comprised in the machine readable code of the at least first identification marker (41);
- (S13) retrieving, from the memory (103a, 103b, 103c), at least any of the first cutting tool identification data (1ctID) associated with the first cutting edge information data (1ceID); and the at least first operation data (10D) associated with the first cutting edge information data (1ceID).

10. The method according to any of the claims 7-9 further comprising :
- (S14) displaying, via a user interface (400a, 400b, 400c), at least any of: the first cutting tool identification data (1ctID); the first cutting edge information data (1ceID); and the at least first operation data (10D).

11. The method according to any of the claims 6-10 wherein the method is performed by an electronic device (1a, 1b, 1c) having at least one processing circuitry (102a, 102b, 102c).

12. A computer program product (500) comprising a non-transitory computer readable medium, having thereon a computer program comprising program instructions, the computer program being loadable into a processing circuitry (102a, 102b, 102c) and configured to cause execution of the method according to any of claims 6 through 11 when the computer program is run by the processing circuitry (102a, 102b, 102c).

## Patentansprüche

1. Schneidwerkzeug (20) mit wenigstens einer ersten Schneidkante (21) und wenigstens einer ersten Identifikationsmarkierung (41), die an der ersten Schneidkante (21) angeordnet ist, wobei die wenigstens erste Identifikationsmarkierung (41) ein maschinenlesbarer Code ist, der mit einem ersten Schneidkanteninformationsdatum (1ceID) assoziiert ist, wobei das Schneidwerkzeug (20) ferner eine zweite Schneidkante (22) und eine zweite Identifikationsmarkierung (42) aufweist, die an der zweiten Schneidkante (22) angeordnet ist, wobei die zweite Identifikationsmarkierung (42) ein maschinenlesbarer Code ist, der mit dem zweiten Schneidkanteninformationsdatum (2ceID) assoziiert ist, **dadurch gekennzeichnet, dass** das erste Schneidkanteninformationsdatum (1ceID) und das zweite Schneidkanteninformationsdatum (2ceID) eindeutige Identitäten aufweisen.

2. Schneidwerkzeug (20) nach Anspruch 1, wobei
die erste Identifikationsmarkierung (41) an dem Schneidwerkzeug (20) in einem Abstand zu der ersten Schneidkante (21) angeordnet ist, der kürzer ist als der Abstand der ersten Identifikationsmarkierung (41) zu der zweiten Schneidkante (22), und
die zweite Identifikationsmarkierung (42) an dem Schneidwerkzeug (20) in einem Abstand zu der zweiten Schneidkante (22) angeordnet ist, der kürzer ist als der Abstand der Identifikationsmarkierung (42) zu der ersten Schneidkante (21).

3. Schneidwerkzeug (20) nach einem der Ansprüche 1 bis 2, wobei die wenigstens erste Identifikationsmarkierung (41) zumindest eines oder eine Kombination von jeweils zumindest einem ausgewählt unter zweidimensionaler Code, dreidimensionaler Code, ein Bild, ein Quick Response Code, ein zweidimensionaler farbiger Hochkapazitätscode, ein europäischer Artikelnummerncode, ein DataMatrix-Code oder ein MaxiCode ist.

4. System (100) zur Verbesserung der Rückverfolgbarkeit wenigstens einer ersten Schneidkante (21) eines Schneidwerkzeugs (20), wobei das System Folgendes aufweist:
• eine Lesevorrichtung (10a, 10b, 10c) zum Lesen eines maschinenlesbaren Codes,
• eine elektronische Vorrichtung (1a, 1b, 1c), die so konfiguriert ist, dass sie mit der Lesevorrichtung (10a, 10b, 10c) verbunden werden kann, wobei die elektronische Vorrichtung (1a, 1b, 1c) wenigstens eine Prozessierungsschaltung (102a, 102b, 102c) aufweist, die so konfiguriert ist, dass sie das System (100) dazu veranlasst:
- wenigstens eine erste Identifikationsmarkierung (41) auf dem Schneidwerkzeug (20) durch die Lesevorrichtung (10a, 10b, 10c) zu erfassen, wobei die wenigstens erste Identifikationsmarkierung (41) ein maschinenlesbarer Code ist,
- die wenigstens erste Identifikationsmarkierung (41) durch die Lesevorrichtung (10a, 10b, 10c) zu lesen,
- die wenigstens erste Identifikationsmarkierung (41) zu dekodieren, um das wenigstens erste Schneidkanteninformationsdatum (1ceID) zu ermitteln, das in dem maschinenlesbaren Code der wenigstens ersten Identifikationsmarkierung (41) enthalten ist, wobei das erste Schneidkanteninformationsdatum (1ceID) eine eindeutige Identität aufweist,
- eine zweite Identifikationsmarkierung (42) auf dem Schneidwerkzeug (20) durch die Lesevorrichtung (10a, 10b, 10c) zu erfassen, wobei die zweite Identifikationsmarkierung (42) ein maschinenlesbarer Code ist,
- die zweite Identifikationsmarkierung (42) durch die Lesevorrichtung (10a, 10b, 10c) zu lesen,
- die zweite Identifikationsmarkierung (41) zu dekodieren, um das zweite Schneidkanteninformationsdatum (2ceID) zu ermitteln, das in dem maschinenlesbaren Code der zweiten Identifikationsmarkierung (42) enthalten ist, wobei das zweite Schneidkanteninformationsdatum (2ceID) eine eindeutige Identität aufweist, und
- ein erstes Schneidwerkzeugidentifikationsdatum (1ctID) auf der Grundlage des ersten Schneidkanteninformationsdatums (1ceID) und des zweiten Schneidkanteninformationsdatums (2ceID) zu erzeugen, und
- wenigstens eines des wenigstens ersten Schneidwerkzeugidentifikationsdatums (1ctID) und des wenigstens ersten Schneidkanteninformationsdatums (1ceID) in einem Speicher (103a, 103b, 103C) zu speichern.

5. System nach Anspruch 4, ferner umfassend:
• ein Schneidwerkzeug (20) mit wenigstens einer ersten Schneidkante (21), wobei das Schneidwerkzeug (20) so konfiguriert ist, dass es in einem Schneidwerkzeughalter (19) montiert werden kann.

6. Verfahren zum Verbessern der Rückverfolgbarkeit von wenigstens einer ersten Schneidkante (21) eines Schneidwerkzeugs (20), wobei das Verfahren Folgendes umfasst:
- (S1a) Erfassen wenigstens einer ersten Identifikationsmarkierung (41) auf dem Schneidwerkzeug (20) durch eine Lesevorrichtung (10a, 10b, 10c), wobei die wenigstens erste Identifikationsmarkierung (41) ein maschinenlesbarer Code ist,
- (S1b) Erfassen einer zweiten Identifikationsmarkierung (42) auf dem Schneidwerkzeug (20) durch die Lesevorrichtung (10a, 10b, 10c), wobei die zweite Identifikationsmarkierung (42) ein maschinenlesbarer Code ist,
- (S2a) Lesen der zumindest ersten Identifikationsmarkierung (41) durch die Lesevorrichtung (10a, 10b, 10c),
- (S2b) Lesen der zweiten Identifikationsmarkierung (42) durch die Lesevorrichtung (10a, 10b, 10c),
- (S3a) Dekodieren der wenigstens ersten Identifikationsmarkierung (41), um das wenigstens erste Schneidkanteninformationsdatum (1ceID) zu ermitteln, das in dem maschinenlesbaren Code der wenigstens ersten Identifikationsmarkierung (41) enthalten ist, wobei das erste Schneidkanteninformationsdatum (1ceID) eine eindeutige Identität aufweist,
- (S3b) Dekodieren der zweiten Identifikationsmarkierung (41), um das zweite Schneidkanteninformationsdatum (2ceID) zu ermitteln, das in dem maschinenlesbaren Code der zweiten Identifikationsmarkierung (42) enthalten ist, wobei das zweite Schneidkanteninformationsdatum (2ceID) eine eindeutige Identität aufweist,
- (S4b) Erzeugen eines ersten Schneidwerkzeugidentifikationsdatums (1ctID) auf der Grundlage des ersten Schneidkanteninformationsdatums (1ceID) und des zweiten Schneidkanteninformationsdatums (2ceID), und
- (S7) Speichern wenigstens eines des wenigstens ersten Schneidwerkzeugidentifikationsdatums (1ctID) und des wenigstens ersten Schneidkanteninformationsdatums (1ceID) in einem Speicher (103a, 103b, 103c).

7. Verfahren nach Anspruch 6, ferner umfassend:
- (S5) Empfangen der Eingabe von wenigstens einem ersten Betriebsdatum (10D), das mit wenigstens einem des wenigstens ersten Schneidwerkzeugidentifikationsdatums (1ctID) und dem wenigstens ersten Schneidkanteninformationsdatums (1ceID) assoziiert werden soll, und
- (S8) Speichern des wenigstens ersten Betriebsdatums (10D), das mit wenigstens einem des wenigstens ersten Schneidwerkzeugidentifikationsdatums (1ctID) und des wenigstens ersten Schneidkanteninformationsdatums (1ceID) assoziiert ist, in dem Speicher (103a, 103b, 103c).

8. Verfahren nach Anspruch 7, ferner umfassend:
- (S6) Erzeugen wenigstens eines ersten Assoziierungsdatums (1AD), das das wenigstens erste Schneidwerkzeugidentifikationsdatum (1ctID) umfasst, das mit wenigstens einem des wenigstens ersten Schneidkanteninformationsdatums (1ceID) und des wenigstens ersten Betriebsdatums (10D) assoziiert ist, und
- (S9) Speichern des wenigstens ersten Assoziierungsdatums (1AD) in dem Speicher (103a, 103b, 103c).

9. Verfahren nach einem der Ansprüche 7 bis 8, ferner umfassend:
- (S10) Erfassen wenigstens der ersten Identifikationsmarkierung (41) auf dem Schneidwerkzeug (20) durch die Lesevorrichtung (10a, 10b, 10c),
- (S11) Lesen derwenigstens ersten Identifikationsmarkierung (41) durch die Lesevorrichtung (10a, 10b, 10c),
- (S12) Dekodieren der wenigstens ersten Identifikationsmarkierung (41), um das erste Schneidkanteninformationsdatum (1ceID) zu ermitteln, die das dem maschinenlesbaren Code der wenigstens ersten Identifikationsmarkierung (41) enthalten ist,
- (S13) Abrufen, aus dem Speicher (103a, 103b, 103c), von wenigstens einem ersten Schneidwerkzeugidentifikationsdatum (1ctID), das mit dem ersten Schneidkanteninformationsdatum (1ceID) assoziiert ist, und des wenigstens ersten Betriebsdatums (10D), das mit dem ersten Schneidkanteninformationsdatum (1ceID) assoziiert ist.

10. Verfahren nach einem der Ansprüche 7 bis 9, ferner umfassend:
- (S14) Anzeigen, über eine Benutzerschnittstelle (400a, 400b, 400c), von wenigstens einem von: dem ersten Schneidwerkzeugidentifikationsdatum (1ctID), dem ersten Schneidkanteninformationsdatum (1ceID) und dem wenigstens ersten Betriebsdatum (10D).

11. Verfahren nach einem der Ansprüche 6-10, wobei das Verfahren von einer elektronische Vorrichtung (1a, 1b, 1c) mit wenigstens einer Verarbeitungsschaltung (102a, 102b, 102C) ausgeführt wird.

12. Computerprogrammprodukt (500) mit einem nicht nur vorübergehenden computerlesbarem Medium, auf dem sich ein Computerprogramm mit Programmbefehlen befindet, wobei das Computerprogramm in einen Verarbeitungsschaltkreis (102a, 102b, 102c) ladbar ist und so eingerichtet ist, dass es die Ausführung des Verfahrens nach einem der Ansprüche 6 bis 11 veranlasst, wenn das Computerprogramm von der Verarbeitungsschaltung (102a, 102b, 102c) ausgeführt wird.

## Revendications

1. Outil de coupe (20) comprenant au moins une première arête de coupe (21) et au moins un premier marqueur d'identification (41) agencé au niveau de la première arête de coupe (21) où le au moins un premier marqueur d'identification (41) est un code lisible par machine associé à une donnée d'information de première arête de coupe (1ceID), où l'outil de coupe (20) comprend en outre une seconde arête de coupe (22) et un second marqueur d'identification (42) agencé au niveau de la seconde arête de coupe (22), où le second marqueur d'identification (42) est un code lisible par machine associé à une donnée d'information de seconde arête de coupe (2ceID) **caractérisé en ce que** la donnée d'information de première arête de coupe (1ceID) et la donnée d'information de seconde arête de coupe (2ceID) sont des identités uniques.

2. Outil de coupe (20) selon la revendication 1, dans lequel
le premier marqueur d'identification (41) est agencé sur l'outil de coupe (20) à une distance de la première arête de coupe (21) qui est plus courte que la distance entre le premier marqueur d'identification (41) et la seconde arête de coupe (22), et
le second marqueur d'identification (42) est agencé sur l'outil de coupe (20) à une distance de la seconde arête de coupe (22) qui est plus courte que la distance entre le second marqueur d'identification (42) et la première arête de coupe (21).

3. Outil de coupe (20) selon l'une quelconque des revendications 1 et 2, dans lequel le au moins un premier marqueur d'identification (41) est au moins l'un quelconque des éléments suivants, ou une combinaison d'au moins l'un quelconque des éléments suivants : un code à deux dimensions, un code à trois dimensions, une image, un code à réponse rapide (QR-code), un code à deux dimensions couleur haute capacité, un code de numéro d'article européen (code EAN), un code DataMatrix ou un MaxiCode.

4. Système (100) d'augmentation de la traçabilité d'au moins une première arête de coupe (21) d'un outil de coupe (20), le système comprend :
• un dispositif de lecteur (10a, 10b, 10c) destiné à lire un code lisible par machine ;
• un dispositif électronique (1a, 1b, 1c) configuré pour être connecté au dispositif de lecteur (10a, 10b, 10c), le dispositif électronique (1a, 1b, 1c) présentant au moins un circuit de traitement (102a, 102b, 102c) configuré pour amener le système (100) à :
- détecter, par le biais du dispositif de lecteur (10a, 10b, 10c), au moins un premier marqueur d'identification (41) sur l'outil de coupe (20) où le au moins un premier marqueur d'identification (41) est un code lisible par machine ;
- lire, par le biais du dispositif de lecteur (10a, 10b, 10c), le au moins un premier marqueur d'identification (41) ;
- décoder le au moins un premier marqueur d'identification (41) pour déterminer une donnée d'information d'au moins une première arête de coupe (1ceID) comprise dans le code lisible par machine du au moins un premier marqueur d'identification (41), où la donnée d'information de première arête de coupe (1ceID) est une identité unique ;
- détecter, par le biais du dispositif de lecteur (10a, 10b, 10c), un second marqueur d'identification (42) sur l'outil de coupe (20) où le second marqueur d'identification (42) est un code lisible par machine ;
- lire, par le biais du dispositif de lecteur (10a, 10b, 10c), le second marqueur d'identification (42) ;
- décoder le second marqueur d'identification (42) pour déterminer une donnée d'information de seconde arête de coupe (2ceID) comprise dans le code lisible par machine du second marqueur d'identification (42), où la donnée d'information de seconde arête de coupe (2ceID) est une identité unique ; et
- générer une première donnée d'identification d'outil de coupe (1ctID) sur la base de la donnée d'information de première arête de coupe (1ceID) et de la donnée d'information de seconde arête de coupe (2ceID) ; et
- mémoriser au moins une donnée quelconque parmi la au moins une première donnée d'identification d'outil de coupe (1ctID) et la donnée d'information d'au moins une première arête de coupe (1ceID) dans une mémoire (103a, 103b, 103c).

5. Système selon la revendication 4, comprenant en outre :
• un outil de coupe (20) comprenant au moins une première arête de coupe (21), où l'outil de coupe (20) est configuré pour être monté dans un support d'outil de coupe (19).

6. Procédé d'augmentation de la traçabilité d'au moins une première arête de coupe (21) d'un outil de coupe (20), le procédé comprenant les étapes consistant à :
- (S1a) détecter, par le biais d'un dispositif de lecteur (10a, 10b, 10c), au moins un premier marqueur d'identification (41) sur l'outil de coupe (20) où le au moins un premier marqueur d'identification (41) est un code lisible par machine ;
- (S1b) détecter, par le biais du dispositif de lecteur (10a, 10b, 10c), un second marqueur d'identification (42) sur l'outil de coupe (20) où le second marqueur d'identification (42) est un code lisible par machine ;
- (S2a) lire, par le biais du dispositif de lecteur (10a, 10b, 10c), le au moins un premier marqueur d'identification (41) ;
- (S2b) lire, par le biais du dispositif de lecteur (10a, 10b, 10c), le second marqueur d'identification (42) ;
- (S3a) décoder le au moins un premier marqueur d'identification (41) pour déterminer une donnée d'information d'au moins une première arête de coupe (1ceID) comprise dans le code lisible par machine du au moins un premier marqueur d'identification (41), où la donnée d'information de première arête de coupe (1ceID) est une identité unique ;
- (S3b) décoder le second marqueur d'identification (42) pour déterminer une donnée d'information de seconde arête de coupe (2ceID) comprise dans le code lisible par machine du second marqueur d'identification (42), où la donnée d'information de seconde arête de coupe (2ceID) est une identité unique ; et
- (S4b) générer une première donnée d'identification d'outil de coupe (1ctID) sur la base de la donnée d'information de première arête de coupe (1ceID) et de la donnée d'information de seconde arête de coupe (2ceID) ; et
- (S7) mémoriser au moins une donnée quelconque parmi la au moins une première donnée d'identification d'outil de coupe (1ctID) et la donnée d'information d'au moins une première arête de coupe (1ceID) dans une mémoire (103a, 103b, 103c).

7. Procédé selon la revendication 6, comprenant en outre les étapes consistant à :
- (S5) recevoir une entrée d'au moins une première donnée de fonctionnement (10D) à associer à au moins une donnée quelconque parmi la au moins une première donnée d'identification d'outil de coupe (1ctID) et la donnée d'information d'au moins une première arête de coupe (1ceID) ; et
- (S8) mémoriser la au moins une première donnée de fonctionnement (10D) associée à au moins une donnée parmi la au moins une première donnée d'identification d'outil de coupe (1ctID) et la donnée d'information d'au moins une première arête de coupe (1ceID) dans la mémoire (103a, 103b, 103c).

8. Procédé selon la revendication 7, comprenant en outre les étapes consistant à :
- (S6) générer au moins une première donnée d'association (1AD) comprenant la au moins une première donnée d'identification d'outil de coupe (1ctID) associée à au moins une donnée parmi la donnée d'information d'au moins une première arête de coupe (1ceID) et la au moins une première donnée de fonctionnement (10D) ; et
- (S9) mémoriser la au moins une première donnée d'association (1AD) dans la mémoire (103a, 103b, 103c).

9. Procédé selon l'une quelconque des revendications 7 et 8, comprenant en outre les étapes consistant à :
- (S10) détecter, par le biais du dispositif de lecteur (10a, 10b, 10c), au moins le premier marqueur d'identification (41) sur l'outil de coupe (20) ;
- (S11) lire, par le biais du dispositif de lecteur (10a, 10b, 10c), le au moins un premier marqueur d'identification (41) ;
- (S12) décoder le au moins un premier marqueur d'identification (41) pour déterminer la donnée d'information de première arête de coupe (1ceID) comprise dans le code lisible par machine du au moins un premier marqueur d'identification (41) ;
- (S13) récupérer, à partir de la mémoire (103a, 103b, 103c), au moins une donnée quelconque parmi la première donnée d'identification d'outil de coupe (1ctID) associée à la donnée d'information de première arête de coupe (1ceID) ; et la au moins une première donnée de fonctionnement (1OD) associée à la donnée d'information de première arête de coupe (1ceID).

10. Procédé selon l'une quelconque des revendications 7 à 9, comprenant en outre l'étape consistant à :
- (S14) afficher, via une interface utilisateur (400a, 400b, 400c), au moins une donnée quelconque parmi : la première donnée d'identification d'outil de coupe (1ctID) ; la donnée d'information de première arête de coupe (1ceID) ; et la au moins une première donnée de fonctionnement (10D).

11. Procédé selon l'une quelconque des revendications 6 à 10, où le procédé est exécuté par un dispositif électronique (1a, 1b, 1c) présentant au moins un circuit de traitement (102a, 102b, 102c).

12. Produit de programme informatique (500) comprenant un support lisible par ordinateur non transitoire, comportant sur celui-ci un programme informatique comprenant des instructions de programme, le programme informatique étant chargeable dans un circuit de traitement (102a, 102b, 102c) et configuré pour déclencher l'exécution du procédé selon l'une quelconque des revendications 6 à 11 lorsque le programme informatique est exécuté par le circuit de traitement (102a, 102b, 102c).
